# EUROPÄISCHE PATENTANMELDUNG

(11) **EP 0 565 860 A1**
(43) Veröffentlichungstag der Anmeldung: **20.10.1993**
(21) Anmeldenummer: 93103823.6
(22) Anmeldetag: 10.03.1993
(51) Int. Cl.: F16F 13/00

(54) **Hydraulisch dämpfendes Gummilager**

(30) Priorität: 13.04.1992 DE 4212311; 02.06.1992 DE 4218110
(71) Anmelder: Boge GmbH, D-53783 Eitorf (DE)
(72) Erfinder: Schyboll, Georg, W-5485 Sinzig-Westum (DE); Mayerböck, Wilhelm, W-5483 Kirchdaun (DE)

(57) **Zusammenfassung**

Hydraulisch dämpfendes Gummilager mit zwei in Axialrichtung einander gegenüberliegenden, starren Stirnwänden (13,19) und wenigstens zwei axial hintereinander angeordneten Dämpfungsflüssigkeit enthaltenden Kammern (1,2), bei denen die Kammern über eine in einer Trennwand (3) angeordneten Drosselstelle (4) miteinander verbunden sind und wobei zur Zusammenfassung von verschiedenen Funktionen der gummielastische Teil (5) der Trennwand als Ausgleichsraum und/oder Abdichtung für die Drosselstelle und/oder gleichzeitig Entkopplungsmembran ausgebildet ist.

## Beschreibung

Die Erfindung bezieht sich auf ein hydraulisch dämpfendes Gummilager mit zwei in Axialrichtung einander gegenüberliegenden, starren Stirnwänden und wenigstens zwei axial hintereinander angeordneten Dämpfungsflüssigkeit enthaltenden Kammern, von denen mindestens eine als gummielastisches Federelement ausgebildete Umfangswand aufweist, wobei die Kammern über mindestens eine in einer Trennwand angeordnete Drosselstelle miteinander in Verbindung stehen.

Gummilager dieser Art sind bekannt (z.B. DE-OS 38 31 816), bei denen die beiden Kammern über mindestens eine in der Trennwand angeordneten Drosselstelle miteinander in Verbindung stehen und wobei die zweite Kammer von einer elastischen Membran in Form eines Ausgleichsraumes abgegrenzt ist, während zwischen den beiden mit Flüssigkeit gefüllten Kammern eine Entkopplungsmembran im Bereich der Trennwand angeordnet ist. Bei einem derartigen Gummilager ist für jede Funktion, wie z.B. Ausgleichskammer, Drosselstelle oder Entkopplungsmembran ein spezielles, separates Bauteil vorgesehen, welches die charakteristischen Eigenschaften für die jeweilige Funktion aufweist.

Aufgabe der Erfindung ist es, ein hydraulisch dämpfendes Gummilager derart zu vereinfachen, daß nicht nur eine kostengünstigere Herstellung möglich ist, sondern daß in entsprechend geeigneten Bauteilen mehrere Funktionen des Gummilagers zusammengefaßt werden können.

Zur Lösung dieser Aufgabe ist erfindungsgemäß vorgesehen, daß mindestens ein Teil von mindestens einer Kammer und mindestens ein Teil der Trennwand als einteiliges Bauteil ausgebildet ist.

Vorteilhaft ist bei dieser Ausbildung, daß das einteilige Bauteil zumindest teilweise den Drosselkanal begrenzt und gleichzeitig als Entkopplungsmembran und/oder als Ausgleichsraum ausgebildet ist. Alle diese vorgenannten Funktionen lassen sich mit dem einteiligen Bauteil ausführen, so daß nicht nur die Anzahl der Bauteile reduziert, sondern auch der Montageaufwand verringert werden kann. Nach einem weiteren wesentlichen Merkmal ist vorgesehen, daß das einteilige Bauteil aus elastischem Material hergestellt ist.

Darüber hinaus läßt sich zusätzlich vorsehen, daß dem einteiligen Bauteil noch mindestens ein Teil der Wandung der Drosselstelle zugeordnet ist.

Um den Fertigungsaufwand weiter zu reduzieren, ohne daß die Funktionsfähigkeit des Gummilagers vermindert wird, ist in Ausgestaltung der Erfindung vorgesehen, daß die Trennwand aus mindestens zwei Metallteilen und dem einteiligen Bauteil besteht. Hierbei lassen sich mit Vorteil die Metallteile scheibenförmig ausbilden und eine ringförmig um die Lagerachse verlaufende Drosselstelle bilden.

In Ausgestaltung der Erfindung ist vorgesehen, daß ein Metallteil als Außenteil und ein weiteres Metallteil als Innenteil für die Drosselstelle ausgebildet ist. Durch die Verwendung von einfachen Blechteilen ist es fertigungstechnisch ohne weiteres möglich, die Drosselstelle in Form eines ringförmig um die Lagerachse verlaufenden Kanales durch spanlose Fertigungsverfahren direkt in die Metallteile einzuformen.

Nach einem weiteren wesentlichen Merkmal ist vorgesehen, daß das einteilige Bauteil als Entkopplungsmembran, als Ausgleichsraum und als Abdichtung und Befestigungselement ausgebildet ist. Durch die Verwendung eines einteiligen Bauteiles aus elastischem Material kann mit diesem Bauteil die Funktion der Entkopplung, des Ausgleichsraumes sowie der Abdichtung des Ausgleichsraumes gegenüber dem Gehäuse bzw. der Abdichtung der Drosselstelle gegenüber mindestens einer der beiden Kammern erfolgen.

Zur Erzielung eines definierten Auslenkungsweges für die Entkopplung ist in Ausgestaltung der Erfindung vorgesehen, daß eines der Metallteile als Anschlag für die Entkopplungsmembran dient.

Nach einer besonders günstigen Ausführungsform ist vorgesehen, daß eine der Stirnwände direkt oder indirekt eine in Richtung der Trennwand verlaufende Kontur aufweist, so daß ein Anschlag für die Entkopplungsmembran gebildet wird. Der Anschlag für die Entkopplungsmembran läßt sich dabei direkt durch die Kontur der Stirnwand ausformen oder es können zusätzliche einfache Bauteile, z.B. aus Kunststoff oder dergleichen in die Stirnwand eingesteckt werden, so daß auf diese Weise der zweite Anschlag mit axial definiertem Spiel für die Entkopplungsmembran gebildet wird.

Zur Erzielung einer beruhigten Entkopplung, d.h. einer Entkopplung bei der die Entkopplungsmembran nicht in Resonanzschwingung geraten kann, ist in besonders einfacher Weise, nach einem weiteren wesentlichen Merkmal vorgesehen, daß das einteilige Bauteil im Bereich der Lagerachse des Gummilagers zwischen einem der Metallteile und einer der Stirnwände kraftschlüssig fixiert ist.

Zur Erzielung einer weiteren Vereinfachung und Reduzierung der Anzahl von Bauteilen ist nach einem weiteren Merkmal vorgesehen, daß bei Verwendung einer ringförmig um die Lagerachse verlaufenden Drosselstelle ein Teil des einteiligen Bauteils in die Drosselstelle hineinverläuft und die Ein- und Austrittsöffnung voneinander trennt. Mit Vorteil läßt sich das einteilige Bauteil in einem dafür vorgesehenen Bereich mit einem Materialvorsprung versehen, der beim Zusammenbau der Trennwand die Drosselstelle mit einer vorgegebenen Kanallänge versieht. Mit Vorteil ist dabei das einteilige Bauteil mit einem parallel zur Drosselstelle angeordneten Bypaß versehen.

In Ausgestaltung der Erfindung läßt sich bei Verwendung eines parallel zur Drosselstelle angeordneten Bypasses eine Druckabhängigkeit des Bypasses erzielen. Hierbei ist als druckabhängiger Bypaß eine, in mindestens einer Richtung bewegliche, Gummilippe vorgesehen. Vorteilhaft ist hierbei, daß bei einem bestimmten Druck in einer der beiden Arbeitskammern der Bypaß für einen Druckabbau, einer Vermeidung von Kavitation oder zur Vermeidung eines Unterdruckes öffnet.

Nach einer weiteren Ausführungsform ist vorgesehen, daß die Entkopplungsmembran zentrisch und der Ausgleichsraum ringförmig um die Lagerachse verlaufend angeordnet ist oder daß die Entkopplungsmembran ringförmig um die Lagerachse und der Ausgleichsraum zentrisch angeordnet ist.

Eine gute Fixierung des einteiligen Bauteiles erfolgt, indem das einteilige Bauteil in einem der scheibenförmigen Bauteile eingeknöpft ist.

Bevorzugte Ausführungsbeispiele sind in den Zeichnungen schematisch dargestellt.

Es zeigt:
Figur 1 ein hydraulisch dämpfendes Gummilager im Schnitt
Figur 2 eine Trennwand eines Gummilagers
Figuren 3 - 5 weitere Ausführungsformen von Gummilagern mit entsprechenden Trennwänden.

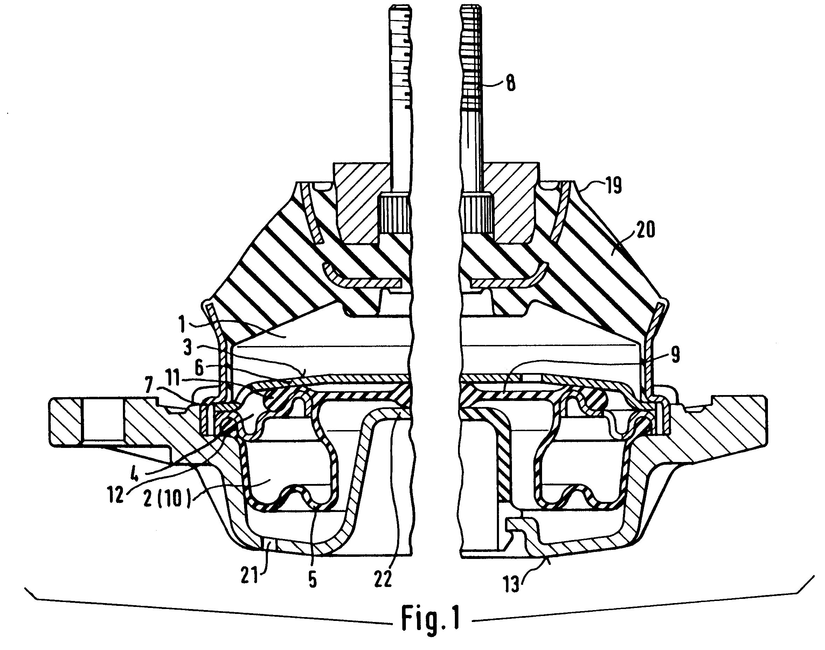

Das in Figur 1 dargestellte hydraulisch dämpfende Gummilager besitzt zwei in axialer Richtung einander gegenüberliegende Stirnwände 13 und 19, wobei die Stirnwand 19 mit einem gummielastischen Federelement 20 versehen ist. Der ebenfalls am gummielastischen Federelement 20 befestigte Verbindungsflansch ist mit einer Bördelung versehen, in die die Stirnwand 13 eingreift und das hydraulisch dämpfende Gummilager verschließt. Das Gummilager ist desweiteren mit einer Trennwand 3 versehen, wobei die beiden Kammern 1 und 2 über die Drosselstelle 4 der Trennwand 3 miteinander in Verbindung stehen. Die Kammer 2 ist dabei mit einem Faltenbalg versehen, und bildet einen Ausgleichsraum 10, der die Dämpfungsflüssigkeit drucklos aufnimmt.

Die Trennwand 3 besteht im einzelnen aus den beiden Metallteilen 6 und 7, die durch entsprechende Verformung die Drosselstelle 4 bilden, wobei das einteilige Bauteil 5 die Abdichtung 11 der Drosselstelle 4 enthält und darüber hinaus zusätzlich noch im zentrischen Bereich mit der Entkopplungsmembran 9 sowie dem Faltenbalg selbst versehen ist. Im Bereich des Faltenbalges ist das Befestigungselement 12 ebenfalls Bestandteil des einteiligen Bauteiles 5 und dient der Fixierung und Abdichtung des Faltenbalges gegenüber der unteren Stirnwand 13. Über entsprechende Bohrungen im Befestigungsteil 6 wird die Entkopplungsmembran 9 von der Dämpfungsflüssigkeit aus der Kammer 1 beaufschlagt, während auf der gegenüberliegenden Seite der Entkopplungsmembran 9 über entsprechende Bohrungen 21 Atmosphärendruck auf die Entkopplungsmembran 9 wirkt.

Zur Erzielung einer beruhigten Entkopplung ist das Zentrum 22 der Entkopplungsmembran 9 zwischen dem oberen Metallteil 3 und der unteren Stirnwand 13 kraftschlüssig eingespannt. Auf dieser Art und Weise lassen sich Resonanzschwingungen der Entkopplungsmembran vermeiden. Anstelle der entsprechenden Ausformung der unteren Stirnwand 13 (linke Bildhälfte) können auch entsprechende Kunststoffteile oder Metallteile in die Stirnwand 13 eingeknöpft werden (rechte Bildhälfte).

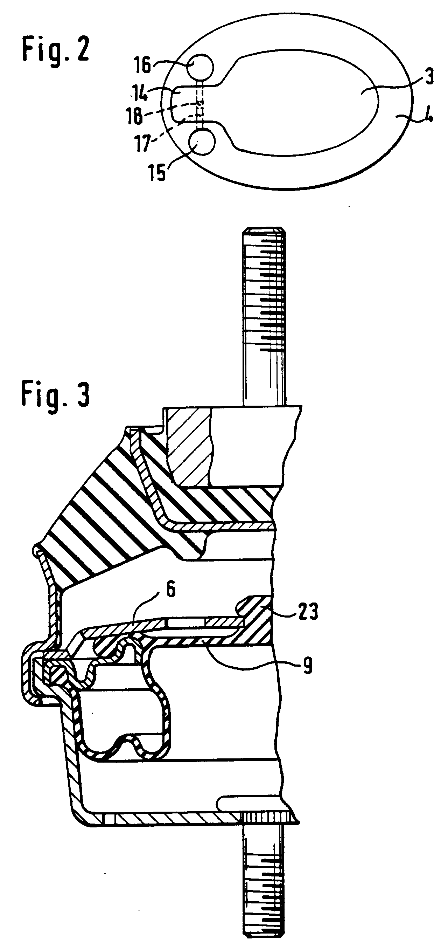

Auf der Figur 2 ist in Draufsicht eine Trennwand 3 zu erkennen, wobei die Drosselstelle 4 mit Ein- (15) und Austrittsöffnung (16) versehen ist. Um eine entsprechende Strömung von einer Kammer zur anderen Kammer zu gewährleisten, ist ein Teil 14 des einteiligen Bauteiles 15 derart ausgebildet, daß die Drosselstelle 4 in einem Teilbereich verschlossen werden kann. Gleichzeitig läßt sich in diesem Teil 14 ein Bypaß 17 anordnen, der entweder ständig offen oder mit einem Ventil versehen werden kann. Bei dieser in Figur 2 dargestellten Ausführungsform ist der Bypaß 17 mit einer Gummilippe 18 versehen, die in beiden Richtungen ab einem bestimmten Druck ausgelenkt werden kann, so daß der Bypaß 17 druckabhängig öffnet.

Die Figur 3 entspricht im Prinzip der Figur 1, mit dem Unterschied, daß die Entkopplungsmembran 9 durch das eingeknöpfte Element 23 im scheibenförmigen Metallteil 6 erfolgt. Durch das Element 23 wird die Entkopplungsmembran beruhigt.

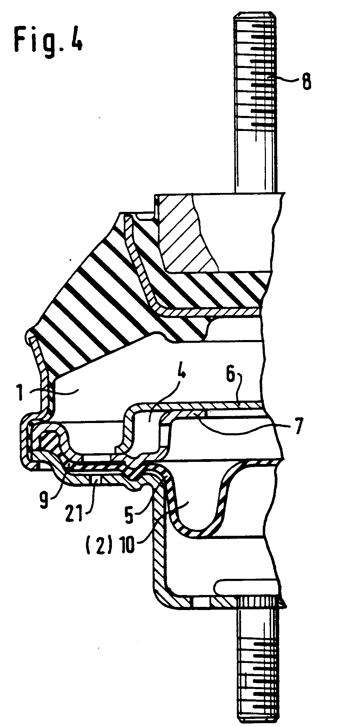

Aus der Figur 4 ist ein Gummilager zu entnehmen, bei dem das einteilige Bauteil 5 im Zentrum den Ausgleichsraum 10 bildet, wobei die Entkopplungsmembran 9 ringförmig um die Lagerachse 8 verläuft. Der Raum hinter der Entkopplungsmembran 9 ist zur Atmosphäre durch die Bohrung 21 entlüftet. Der Bereich der Entkopplungsfläche der Entkopplungsmembran ist radial innen und außen form- und/oder kraftschlüssig fixiert. Die beiden Metallteile 6 und 7 formen die Drosselstelle 4, die ringförmig um die Lagerachse 8 verläuft und mit entsprechenden Ein- und Austrittsöffnungen für die Kammer 1 und Kammer 2 bzw. Ausgleichsraum 10 versehen ist.

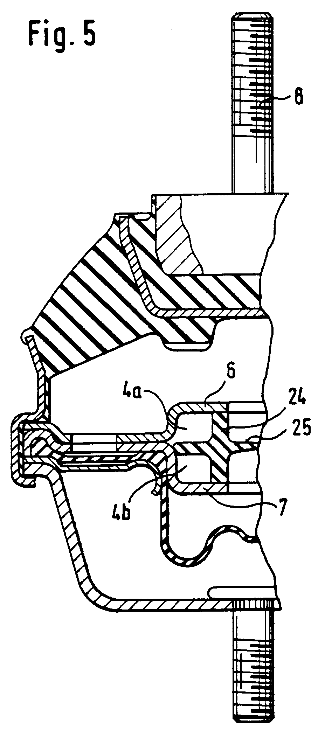

Die Figur 5 zeigt ein Gummilager, welches prinzipiell dem Lager der Figur 4 entspricht, mit dem Unterschied, daß zwischen den Metallteilen 6 und 7 ein Kanalteil 24 angeordnet ist. Dieses Kanalteil 24 enthält die Drosselstelle 4, wobei die Teile 4a und 4b derart ausgebildet sind, daß die Drosselstelle 4 zwei Windungen um die Lagerachse 8 bildet. Jeweils ein Teil 4a und 4b ist mit einer Eintritts- und und Austrittsöffnung versehen, wobei die Teile 4a und 4b untereinander ebenfalls verbunden sind. Im Zentrum 25 des Kanalteiles 24 läßt sich ein Bypaß 17 unterbringen, der entweder offen oder mit einem druckabhängigen Ventil versehen werden kann.

### Bezugszeichenliste

- 1 -: Kammer
- 2 -: Kammer
- 3 -: Trennwand
- 4 -: Drosselstelle
- 5 -: einteiliges Bauteil
- 6 -: Metallteil
- 7 -: Metallteil
- 8 -: Lagerachse
- 9 -: Entkopplungsmembran
- 10 -: Ausgleichsraum
- 11 -: Abdichtung
- 12 -: Befestigungselement
- 13 -: Stirnwand
- 14 -: Teil des einteiligen Bauteils
- 15 -: Eintrittsöffnung
- 16 -: Austrittsöffnung
- 17 -: Bypaß
- 18 -: Gummilippe
- 19 -: Stirnwand
- 20 -: Federelement
- 21 -: Bohrung
- 22 -: Zentrum
- 23 -: Element
- 24 -: Kanalteil
- 25 -: Zentrum

## Patentansprüche

1. Hydraulisch dämpfendes Gummilager mit zwei in Axialrichtung einander gegenüberliegenden, starren Stirnwänden und wenigstens zwei axial hintereinander angeordneten, Dämpfungsflüssigkeit enthaltenden Kammern, von denen mindestens eine als gummielastisches Federelement ausgebildete Umfangswand aufweist, wobei die Kammern über mindestens eine in einer Trennwand angeordnete Drosselstelle miteinander in Verbindung stehen,
dadurch gekennzeichnet,
daß mindestens ein Teil von mindestens einer Kammer (1, 2) und mindestens ein Teil der Trennwand (3) als einteiliges Bauteil (5) ausgebildet ist.

2. Gummilager nach Anspruch 1,
dadurch gekennzeichnet,
daß dem einteiligen Bauteil (5) noch mindestens ein Teil der Wandung der Drosselstelle (4) zugeordnet ist.

3. Gummilager nach Anspruch 1,
dadurch gekennzeichnet,
daß das einteilige Bauteil (5) aus elastischem Material hergestellt ist.

4. Gummilager nach Anspruch 1,
dadurch gekennzeichnet,
daß die Trennwand (3) aus mindestens zwei Metallteilen (6, 7) und dem einteiligen Bauteil (5) besteht.

5. Gummilager nach Anspruch 2,
dadurch gekennzeichnet,
daß die Metallteile (6, 7) scheibenförmig ausgebildet sind und eine ringförmig um die Lagerachse (8) verlaufende Drosselstelle (4) bilden.

6. Gummilager nach Anspruch 2,
dadurch gekennzeichnet,
daß ein Metallteil (6) als Außenteil und ein weiteres Metallteil (7) als Innenteil für die Drosselstelle (4) ausgebildet ist.

7. Gummilager nach Anspruch 1,
dadurch gekennzeichnet,
daß das einteilige Bauteil (5) als Entkopplungsmembran (9), als Ausgleichsraum (10) und als Abdichtung (11) und Befestigungselement (12) ausgebildet ist.

8. Gummilager nach Anspruch 1,
dadurch gekennzeichnet,
daß eines der Metallteile (6, 7) als Anschlag für die Entkopplungsmembran (9) dient.

9. Gummilager nach Anspruch 1,
dadurch gekennzeichnet,
daß eine der Stirnwände (13) direkt oder indirekt eine in Richtung der Trennwand (3) verlaufende Kontur aufweist, so daß ein Anschlag für die Entkopplungsmembran (9) gebildet wird.

10. Gummilager nach Anspruch 1,
dadurch gekennzeichnet,
daß das einteilige Bauteil (5) im Bereich der Lagerachse (8) des Gummilagers zwischen einem der Metallteile (6) und einer der Stirnwände (13) kraftschlüssig fixiert ist.

11. Gummilager nach Anspruch 1,
dadurch gekennzeichnet,
daß bei Verwendung einer ringförmig um die Lagerachse (8) verlaufenden Drosselstelle (4) ein Teil (14) des einteiligen Bauteils (5) in die Drosselstelle (4) hineinverläuft und die Ein- (15) und Austrittsöffnung (16) voneinander trennt.

12. Gummilager nach Anspruch 9,
dadurch gekennzeichnet,
daß das einteilige Bauteil (5) mit einem parallel zur Drosselstelle (4) angeordneten Bypaß (17) versehen ist.

13. Gummilager nach Anspruch 10,
dadurch gekennzeichnet,
daß der Bypaß (17) druckabhängig arbeitet.

14. Gummilager nach Anspruch 11,
dadurch gekennzeichnet,
daß als Bypaß (17) eine Gummilippe (18) vorgesehen ist.

15. Gummilager nach Anspruch 1,
dadurch gekennzeichnet,
daß die Entkopplungsmembran (9) zentrisch und der Ausgleichsraum (10) ringförmig um die Lagerachse (8) verlaufend angeordnet ist.

16. Gummilager nach Anspruch 1,
dadurch gekennzeichnet,
daß die Entkopplungsmembran (9) ringförmig um die Lagerachse (8) und der Ausgleichsraum (10) zentrisch angeordnet ist.

17. Gummilager nach Anspruch 1,
dadurch gekennzeichnet,
daß das einteilige Bauteil (5) in einem der scheibenförmigen Bauteile (6, 7) eingeknöpft ist.
